# EUROPÄISCHE PATENTANMELDUNG

(11) **EP 0 824 205 A1**
(43) Veröffentlichungstag der Anmeldung: **18.02.1998**
(21) Anmeldenummer: 97113288.1
(22) Anmeldetag: 01.08.1997
(51) Int. Cl.: F16L 25/00

(54) **Anschlussmuffe für einen aus thermoplastischem Profilband gewickelten Schlauch**

(30) Priorität: 12.08.1996 DE 29613921 U
(71) Anmelder: TRUPLAST KUNSTSTOFFTECHNIK GMBH, D-35428 Langgöns (DE)
(72) Erfinder: Linhart, Georg, 61206 Wöllstadt (DE)

(57) **Zusammenfassung**

Offenbart wird eine Anschlußmuffe für einen aus Profilband gewickelten Schlauch (3). Die Anschlußmuffe weist ein in den Schlauch (3) eingreifendes erstes Muffenteil und ein den Schlauch (3) umgreifendes zweites Muffenteil auf. Die Muffenteile sind durch Eingriff eines Ringsteges des einen Muffenteiles in eine Ringnut des anderen Muffenteiles miteinander verbunden. Eines der Muffenteile ist mit einem zur Schraubverbindung mit dem Schlauch (3) ausgebildeten Gewindegang versehen. Der Ringsteg (2a) ist am zweiten Muffenteil (2) angeformt. Das erste Muffenteil (1) weist die Ringnut (1d), den Gewindegang (1b), einen umlaufenden Anschlag (1c) für den Ringsteg (2a) des zweiten Muffenteils (2) und eine von der Ringnut (1d) in Richtung des Gewindeganges (1b) abfallende Ringschulter (1f) auf. Der Ringsteg (2a), die Ringschulter (1f), eine zwischen dem Gewindegang (1b) und der Ringschulter (1f) vorgesehene freie Mantelfläche des ersten Muffenteils (1) sowie ein Abschnitt des zweiten Muffenteils (2) bilden eine Kammer für eine elastische Dichtmasse (4).

## Beschreibung

Die Erfindung bezieht sich auf eine Anschlußmuffe für einen aus thermoplastischem Profilband gewickelten Schlauch nach dem Oberbegriff des Anspruches 1.

Es ist bereits eine Anschlußmuffe der im Oberbegriff des Anspruches 1 genannten Art bekannt. Der zum Einstecken in den Schlauch vorgesehene Bereich des ersten Muffenteils ist hierbei konisch ausgebildet. Ferner weist das erste Muffenteil den Ringsteg auf. Das zweite Muffenteil ist dagegen mit dem Gewindegang und der Ringnut versehen. Die beiden Muffenteile werden durch axialen Druck zusammengefügt, wobei der Ringsteg des ersten Muffenteils drehfest in die Ringnut des zweiten Muffenteils einschnappt. Die vereinigten Teile sind sodann auf den Schlauch aufschraubbar, der infolge des zu seiner Herstellung verwendeten Profilbandes außen wendelförmig verlaufende Wellentäler und Wellenberge aufweist, die ein Gegengewinde für den Gewindegang des zweiten Muffenteils bilden. Das zweite Muffenteil wird zur Vereinigung mit dem Schlauch zunächst bis zum Anschlag am Gewindegang in den Schlauchmund eingesteckt. Mit einer Hand muß sodann der Schlauch gegen axiales Drehen festgehalten werden, während mit der anderen Hand das zweite Muffenteil gedreht werden muß. Dabei greift der Gewindegang des zweiten Muffenteils in die Gewindegänge des Schlauches ein und zieht den Schlauch in das zweite Muffenteil ein. Beim Einziehen wird der Schlauch durch die konische Ausbildung des ersten Muffenteils aufgeweitet und gegen die Innenseite des zweiten Muffenteils gepreßt, wodurch die vereinigten Teile gegeneinander abgedichtet sind. Sowohl das Festhalten des Schlauches, als auch das Drehen des zweiten Muffenteils erfordern erhebliche Kräfte, die insbesondere bei engen Montageverhältnissen nur sehr schwer aufzubringen sind. Abgesehen davon, wird der Schlauch bei seiner Vereinigung mit der Anschlußmuffe stark auf Torsion beansprucht. Die Vereinigung der beiden Muffenteile mit dem Schlauch kann auch so vorgenommen werden, daß das zweite Muffenteil zunächst auf den Schlauch aufgeschraubt wird und sodann das erste Muffenteil in das zweite Muffenteil eingepreßt wird, bis der Ringsteg des ersten Muffenteils in die Ringnut des zweiten Muffenteils einschnappt. Auch hierbei sind ebenfalls erhebliche Kräfte für die Vereinigung der Teile erforderlich, da, wie bei der erst genannten Methode, der Schlauch durch das erste Muffenteil aufgeweitet werden muß.

Aufgabe der Erfindung ist es, die Anschlußmuffe der im Oberbegriff des Anspruches 1 genannten Art so auszubilden, daß sie auch bei engen Montageverhältnissen leicht mit dem Schlauch vereinigt werden kann und die vereinigten Teile dennoch gut gegeneinander abgedichtet sind.

Die gestellte Aufgabe wird erfindungsgemäß durch die im kennzeichnenden Teil des Anspruches 1 angegebene Ausbildung gelöst.

Zweckmäßige Aus- und Weiterbildungen des Erfindungsgegenstandes sind in den Ansprüchen 2 und 3 angegeben.

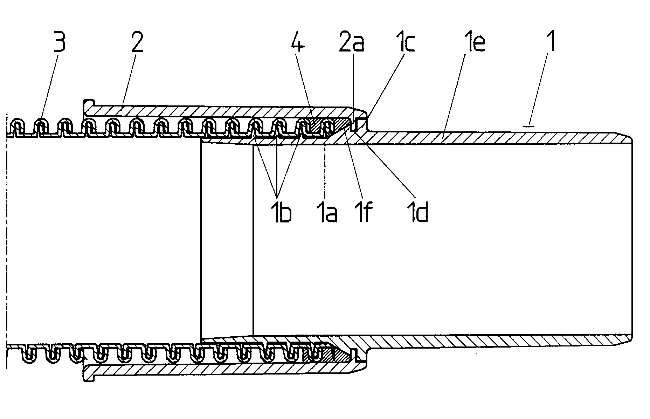

Ein Ausführungsbeispiel der Erfindung ist in der Zeichnung rein schematisch dargestellt, die einen Längsschnitt einer Anschlußmuffe in ihrer Bestimmungslage zeigt.

In der Zeichnung ist mit 1 ein aus Kunststoff gespritztes erstes Muffenteil bezeichnet, das einen zum Einstecken in einen Schlauch 3 dienenden Bereich 1a aufweist. Auf dem Mantel des Bereiches 1a ist ein Gewindegang 1b und ein umlaufender Anschlag 1c angeformt. In Richtung Bereich 1a, direkt hinter dem Anschlag 1c, ist eine Ringnut 1d vorgesehen, deren eine Wand mit einer Flanke des Anschlages 1c fluchtet. Das erste Muffenteil 1 weist im dargestellten Beispiel ferner noch eine rohrförmige Verlängerung 1e auf. Außerdem ist am ersten Muffenteil 1 eine vom freien Rand der Ringnut 1d in Richtung des Gewindeganges 1b abfallende Ringschulter 1f vorgesehen.

Ein zweites, ebenfalls aus Kunststoff gespritztes Muffenteil, ist mit 2 bezeichnet, das zur Aufnahme des Schlauches 3 dient und mit einem inneren Ringsteg 2a versehen ist. Dem Ringsteg 2a des zweiten Muffenteils 2 ist die Ringnut 1d und der Anschlag 1c des ersten Muffenteils 1 zugeordnet.

Zum Zusammenfügen der beiden Muffenteile 1,2 wird das erste Muffenteil 1 axial gegen den Mund des zweiten Muffenteils 2 gepreßt, wobei der Ringsteg 2a des zweiten Muffenteils 2 auf die Ringschulter 1f des ersten Muffenteils 1 aufgeschoben wird. Im Maße der Steigung der Ringschulter 1f des ersten Muffenteils 1 wird der dem diesem zugekehrte Mund des zweiten Muffenteils 2 aufgeweitet bis der Ringsteg 2a des zweiten Muffenteils 2 in die Ringnut 1d des ersten Muffenteils 1 einschnappt, wodurch die beiden Muffenteile 1 und 2 drehbar miteinander vereinigt sind.

Die Ringschulter 1f und eine sich zwischen dem Gewindegang 1b und der Ringschulter 1f erstreckende freie Mantelfläche des ersten Muffenteils 1 einerseits und der Ringsteg 2a sowie ein die genannten Anformungen des ersten Muffenteils 1 überdeckender Abschnitt des zweiten Muffenteils 2 andererseits, bilden eine Kammer für eine elastische Dichtmasse 4. Die zum Beispiel aus Silikon bestehende Masse 4, kann zum Beispiel entweder auf das erste Muffenteil 1 aufgebracht werden, bevor dieses mit dem zweiten Muffenteil 2 vereinigt wird. Es ist aber auch möglich, die noch im pastösen Zustand befindliche Dichtmasse 4 nach der Vereinigung der beiden Muffenteile 1,2 auf den im zweiten Muffenteil 2 befindlichen Rand des ersten Muffenteils 1 aufzubringen. Beim Einziehen des Schlauches 3 in die vereinigten Muffenteile 1,2 wird die Dichtmasse 4 in ihren Bestimmungsort eingezogen, wobei ein teilweiser Verbleib der Dichtmasse 4 in den angrenzenden Gängen des Schlauches 3 die Dichtwirkung erhöht.

Die zusammengefügt eine gebrauchsfertige Anschlußmuffe bildenden Muffenteile 1 und 2 sind für alle Schläuche geeignet, die außen wendelförmig verlaufende Wellentäler und Wellenberge sowie innen eine wendelförmig verlaufende, als Gegengewinde für den Gewindegang des ersten Muffenteils 1 geeignete Rille aufweisen. Im vorliegenden Beispiel ist der mit 3 bezeichnete Schlauch aus einem wendelförmig gewickelten thermoplastischen Profilband gebildet, das im Querschnitt einen als Radialsteg ausgebildeten Längsrand und einen hakenförmigen Längsrand sowie einen Axialsteg aufweist, der den Radialsteg und den hakenförmigen Längsrand verbindet. Im Zuge des Wickelns übergreift jeweils der hakenförmige Längsrand der einen Bandwindung den Radialsteg der benachbarten Bandwindung. Die benachbarten Längsränder sind fortlaufend durch Schweißen oder Kleben miteinander verbunden. An ihrem inneren Stoß ergibt sich zwischen den benachbarten Bandwindungen eine wendelförmig verlaufende Rille, die als Gegengewinde für den Gewindegang 1b des ersten Muffenteils dienen kann.
Der Schlauch 3 ist nicht Gegenstand der Erfindung. Er wurde lediglich näher beschrieben, um zu zeigen, wie das Gegengewinde für den Gewindegang 1b des ersten Muffenteils 1 gebildet sein kann.

Zur Vereinigung der zusammengefügten Muffenteile 1,2 mit dem Schlauch 3, muß zunächst der Schlauch 3 in das zweite Muffenteil 2 eingesteckt werden, bis er am Gewindegang des ersten Muffenteils 1 anstößt. Durch radiales Drehen des ersten Muffenteils 1, unter gleichzeitigem Festhalten des zweiten Muffenteils 2, greift der Gewindegang 1b des ersten Muffenteils 1 in die innere, wendelförmig verlaufende Rille des Schlauches 3 ein und zieht den Schlauch 3 in das zweite Muffenteil 2 hinein, bis er schließlich an der Ringschulter 1f des ersten Muffenteils 1 anliegt. Da der Schlauch 3 beim Einziehen in die beiden Muffenteile 1,2 keine Formänderung erfährt und nur unwesentlich radial beansprucht wird, ist seine Vereinigung mit den Muffenteilen 1,2 mit nur geringen Kräften möglich, die auch in engen Räumen aufgebracht werden können.

Zweckmäßig ist die freie Mantelfläche der beiden Muffenteile 1,2 mit axial verlaufenden Erhebungen versehen (nicht dargestellt). Wenn die Dichtmasse 4 in ihren elastischen Zustand übergegangen ist, bilden die Erhebungen eine Sperre gegen gegenseitiges radiales Verdrehen der beiden Muffenteile.

## Patentansprüche

1. Anschlußmuffe für einen aus thermoplastischem Profilband gewickelten Schlauch, wobei ein erstes Muffenteil zum Einstecken in den Schlauch und zweites Muffenteil zum Umgriff des Schlauches ausgebildet ist, ferner die beiden Muffenteile durch Eingriff eines Ringsteges des einen Muffenteiles in eine Ringnut des anderen Muffenteiles miteinander verbunden sind sowie eines der beiden Muffenteile mit einem zur Schraubverbindung mit dem Schlauch ausgebildeten erhabenen Gewindegang versehen ist, dadurch gekennzeichnet, daß der Ringsteg (2a) am zweiten Muffenteil (2) angeformt ist; daß das erste Muffenteil (1) die Ringnut (1d), den Gewindegang (1b), ferner einen umlaufenden Anschlag (1c) für den Ringsteg (2a) des zweiten Muffenteils (2) und eine vom freien Rand der Ringnut (1d) in Richtung des Gewindeganges (1b) abfallende Ringschulter (1f) aufweist und daß der Ringsteg (2a), die Ringschulter (1f), eine zwischen dem Gewindegang (1b) und der Ringschulter (1f) vorgesehene freie Mantelfläche des ersten Muffenteils (1) sowie ein die genannten Ausformungen überdeckender Abschnitt des zweiten Muffenteils (2) eine Kammer für eine elastische Dichtmasse (4) bilden.

2. Anschlußmuffe nach Anspruch 1, dadurch gekennzeichnet, daß die freien Mantelflächen der beiden Muffenteils (1,2) mit axial verlaufenden Erhebungen versehen sind.

3. Anschlußmuffe nach Anspruch 1 und 2, dadurch gekennzeichnet, daß das erste Muffenteil (1), entgegengesetzt dem Einsteckbereich, eine rohrförmige Verlängerung (1e) aufweist.
